# EUROPÄISCHE PATENTSCHRIFT

(11) **EP 3 850 241 B1**
(45) Veröffentlichungstag und Bekanntmachung des Hinweises auf die Patenterteilung: **12.10.2022**
(21) Anmeldenummer: 19758976.5
(22) Anmeldetag: 26.08.2019
(51) Int. Cl.: F16D 65/12

(54) **SCHEIBENBREMSE FÜR EIN KRAFTFAHRZEUG UND VERFAHREN ZUM ERFASSEN EINES BREMSMOMENTS EINER SCHEIBENBREMSE**
DISC BRAKE FOR A MOTOR VEHICLE AND METHOD FOR DETECTING A BRAKING TORQUE OF A DISC BRAKE
FREIN À DISQUE POUR UN VÉHICULE À MOTEUR ET PROCÉDÉ DE DÉTECTION D'UN COUPLE DE FREINAGE D'UN FREIN À DISQUE

(30) Priorität: 10.09.2018 DE 102018122013
(43) Veröffentlichungstag der Anmeldung: 21.07.2021
(73) Patentinhaber: KNORR-BREMSE Systeme für Nutzfahrzeuge GmbH, 80809 München (DE)
(72) Erfinder: FUCHS, Alexander, 81677 München (DE); FRICKE, Jens, 94474 Vilshofen (DE); TRIMPE, Robert, 82234 Weßling (DE); KLINGNER, Matthias, 82272 Moorenweis (DE); BLESSING, Michael, 80687 München (DE); EICHLER, Thomas, 80803 München (DE); WERTH, Alexander, 80999 München (DE)
(86) Internationale Anmeldenummer: PCT/EP2019/072724
(87) Internationale Veröffentlichungsnummer: WO 2020/052953

(56) Entgegenhaltungen:
- DE-A1-102006 034 167
- DE-A1-102007 061 094
- DE-A1-102012 007 471
- US-A1- 2002 012 484
- DATABASE WPI Week 200580 Thomson Scientific, London, GB; AN 2005-782275 XP002795303, -& JP 2005 308147 A (HONDA MOTOR CO LTD) 4. November 2005 (2005-11-04)

## Beschreibung

Die vorliegende Erfindung betrifft eine Scheibenbremse für ein Kraftfahrzeug, insbesondere ein Nutzfahrzeug gemäß dem Oberbegriff des Anspruchs 1 sowie ein Verfahren zum Erfassen eines Bremsmoments einer solchen Scheibenbremse.

Gattungsgemäße Scheibenbremsen werden insbesondere bei Kraftfahrzeugen und besonders bei Nutzfahrzeugen eingesetzt, um die Fahrzeuge abzubremsen. Derartige Scheibenbremsen bestehen üblicherweise aus einer Bremsscheibe mit einem oder zwei Reibringen, an die bei einem Bremsvorgang Bremsbeläge angedrückt werden, einer schwimmend gelagerten Zuspanneinheit und einem Bremsträger, mit dem die Scheibenbremse an einer Achse eines Fahrzeugs befestigt, beispielsweise verschraubt wird.

Zur präziseren Regelung einer solchen Scheibenbremse, insbesondere für automatisierte Fahrfunktionen, ist es vorteilhaft, die exakte Leistungsfähigkeit der Bremse, insbesondere die Bremskraft bzw. das Bremsmoment zu kennen. Nicht ausreichend ist hingegen die Kenntnis der Zuspannkraft oder des Betätigungsdruckes. Zur effizienten Gestaltung hochautomatisierter Fahrfunktionen wie beispielsweise Platooning, d.h. den Abstand zwischen Kolonnenteilnehmern einer in Kolonne fahrenden Fahrzeuggruppe zu gewährleisten, ist die Kenntnis der Bremskraft, des Bremsmoments oder des Reibwerts ausschlaggebend.

So ist es beispielsweise aus der WO 2014/184112 A1 bekannt, ein Drehmoment zwischen einer Bremsscheibe der Scheibenbremse und einem Adapterflansch zur Fixierung der Bremsscheibe an einer Nabe des Fahrzeugs mithilfe eines Messmoduls, das die wirkende Tangentialkraft misst, zu ermitteln.

Aus der DE 196 50 477 C1 ist es bekannt, eine Messnabe auf einer Radachse eines Kraftfahrzeugs zu befestigen, die in zwei Teile geteilt ist, wobei ein Teil auf der Radachse befestigt ist und ein zweites Teil die Bremsscheibe hält. Die beiden Teile der Messnabe sind dabei durch radial verlaufende Stege miteinander verbunden. Auf diesen radial verlaufenden Stegen sind Sensoren aufgebracht mit denen die durch Einleitung eines Drehmoments auf die Stege beim Bremsvorgang wirkende Biegespannung messbar ist.

Aus den Druckschriften DE 10 2012 007 471 A1, US 2002/0012484 A1, DE 10 2006 034 167 A1, JP 2005308147 A und DE 10 2007 061 094 A1 sind weitere Messvorrichtungen zur Erfassung eines Bremsmoments einer Scheibenbremse bekannt.

So offenbart die DE 10 2012 007 471 A1 einen an einem Sattelkopf eines Bremssattels befestigten Wirbelstromsensor, der die Verformung des Bremssattels erfasst.

Aus den Druckschriften US 2002/0012484 A1 und DE 10 2007 061 094 A1 ist der Einsatz von Dehnungsmessstreifen bekannt, die im Falle der US 2002/0012484 A1 an einem Achsflansch angeordnet sind, an dem der Bremssattel befestigt ist, und im Falle der DE 10 2007 061 094 A1 an einem Jochbereich des Bremssattels.angeordnet sind.

Aus den Druckschriften DE 10 2006 034 167 A1 und JP 2005308147 A ist es bekannt, anstelle von Dehnungsmessstreifen Lichtwellenleiter einzusetzen, die ebenfalls sensibel auf Verformung reagieren. Die Lichtwellenleiter sind im Falle der DE 10 2006 034 167 A1 im Bereich des Kraftflusses der Bremse angeordnet, dort speziell an Bremskolben. Die JP 2005308147 A offenbart die Anordnung solcher Lichtwellenleiter am Bremssattel und der Bremssattelhalterung.

Aufgabe der vorliegenden Erfindung ist es, eine Scheibenbremse und ein Verfahren zum Erfassen eines Bremsmoments einer Scheibenbremse bereitzustellen, mit der Bremsmomente auf wirtschaftliche Art und Weise unter Verwendung von etablierten Messmethoden ermöglicht ist.

Diese Aufgabe wird durch eine Scheibenbremse mit den Merkmalen des Anspruchs 1 gelöst.

Die Aufgabe wird des Weiteren durch ein Verfahren zum Erfassen eines Bremsmoments mit den Merkmalen des Anspruchs 13 gelöst.

Die erfindungsgemäße Scheibenbremse für ein Kraftfahrzeug, insbesondere für ein Nutzfahrzeug, weist eine Bremsscheibe mit wenigstens einem Reibring sowie wenigstens einen Bremsbelag auf. Die Scheibenbremse weist des Weiteren eine Zuspanneinrichtung auf, mit der der wenigstens eine Bremsbelag an die Bremsscheibe unter Ausübung eines Bremsmoments auf die Bremsscheibe andrückbar ist.

Die Scheibenbremse weist des Weiteren eine Messvorrichtung und eine mit dieser gekoppelte Auswerteeinheit zur Bestimmung des auf die Bremsscheibe ausgeübten Bremsmoments auf. Mit der Messvorrichtung sind infolge eines Bremsvorgangs auftretende physikalische Veränderungen der Bremsscheibe erfassbar, wobei in der Auswerteeinheit aus der gemessenen physikalischen Veränderung der Bremsscheibe das beim Bremsvorgang ausgeübte Bremsmoment berechenbar ist.

Mit einer derart ausgebildeten Scheibenbremse ist in einfacher Weise das anliegende Bremsmoment bei einem Bremsvorgang ermittelbar.

Durch den Einsatz des ermittelten Bremsmoments als Regelgröße für die Regelung des Bremsvorgangs können außerdem zusätzlich zu approximierende Einflussparameter wie beispielsweise mechanische Hysterese oder Reibwertschwankungen eliminiert werden, da solche Parameter im berechneten Bremsmoment bereits enthalten bzw. berücksichtigt sind.

Auch der Einsatz einer teuren und sich nur für Versuchszwecke eignenden Messnabe ist bei der erfindungsgemäßen Scheibenbremse nicht notwendig.

Vorteilhafte Ausführungsvarianten der Erfindung sind Gegenstand der Unteransprüche.

Gemäß einer vorteilhaften Ausführungsvariante ist die Messvorrichtung als Temperaturmessvorrichtung ausgebildet, mit wenigstens einem die Temperatur der Reibfläche des wenigstens einen Reibrings der Bremsscheibe berührungslos erfassenden Temperatursensor, beispielsweise in Gestalt eines Pyrometers. Da die eingebrachte Bremsenergie proportional zur Temperaturerhöhung der Bremsscheibe ist, kann aus der Temperaturerhöhung auf das Bremsmoment in einfacher Weise zurückgerechnet werden.

Gemäß einer bevorzugten Ausführungsvariante weist die Messvorrichtung wenigstens zwei Temperatursensoren auf, die auf einen einzigen ringförmigen Ausschnitt der Reibfläche der Bremsscheibe ausgerichtet sind. Die Pyrometer sind dabei bevorzugt derart angebracht, dass diese auf Messpunkte vor und nach der Auftrefffläche des Bremsbelags, betrachtet in Rotationsrichtung der Bremsscheibe, ausgerichtet sind, was eine Optimierung der gemessenen Temperaturdifferenz vor Ausführung der Bremsung und nach Ausführung der Bremse ermöglicht.

Nach einer weiteren bevorzugten Ausführungsvariante ist mit der Messvorrichtung eine Verformung eines Abschnitts der Bremsscheibe erfassbar.

Gemäß einer bevorzugten Ausführungsvariante ist die Messvorrichtung dabei als mit der Auswerteeinheit gekoppelter Dehnungsmessstreifen ausgebildet. Dieser Dehnungsmessstreifen ist dabei bevorzugt an einem mit einem Reibring der Scheibenbremse verbundenen Scheibenhals angeordnet.

Damit ist in einfacher Weise eine Verformung der Bremsscheibe im Bereich des Scheibenhalses erfassbar, die proportional zum eingebrachten Bremsmoment ist.

Gemäß einer alternativen Ausführungsvariante ist die Messvorrichtung als optische Messeinheit, insbesondere als Fotozelle ausgebildet, die auf einen Abschnitt der Bremsscheibe ausgerichtet ist und so beispielsweise durch Erfassen eines Helligkeitsunterschiedes, der sich aus der Verformung der Bremsscheibe bei einem Bremsvorgang ergibt.

Gemäß einer bevorzugten Ausführungsvariante ist dabei mit der optischen Messeinheit eine Verformung eines sich in Abhängigkeit vom anliegenden Bremsmoment verformenden Elements der Bremsscheibe erfassbar, das an dem wenigstens einen Reibring der Bremsscheibe außerhalb einer Reibfläche des Reibrings angeordnet ist.

Zur optimalen Erfassung eines Helligkeitsunterschiedes ist mit der optischen Messeinheit gemäß einer weiteren Ausführungsvariante eine Verformung eines axial zur Drehachse der Bremsscheibe ausgerichteten, im Scheibenhals der Bremsscheibe eingelassenen Rohres oder eine Relativverschiebung wenigstens zweier auf dem Scheibenhals in Richtung der Drehachse der Bremsscheibe hintereinander angeordneter Ringstücke erfassbar. In einem Fall ergibt sich aus der Verformung des Rohres selbst ein Helligkeitsunterschied. Im zweiten Fall dient das Rohr der Abschirmung sonstigen Lichts.

Gemäß einer weiteren bevorzugten Ausführungsvariante einer erfindungsgemäßen Scheibenbremse, bei der die Bremsscheibe einen mit dem wenigstens einen Reibring verbundenen Scheibenhals aufweist, an dessen Mantelfläche eine erstes Element einer ersten berührungslos arbeitenden Drehzahlsensoreinheit angeordnet ist, ist auch an einer Mantelfläche des wenigstens einen Reibrings ein erstes Element einer zweiten Drehzahlsensoreinheit angeordnet, wobei die aktuelle Drehzahl der Bremsscheibe messende Drehzahlsensoren mit der Auswerteeinheit gekoppelt sind, wobei aus einer durch eine Verformung der Bremsscheibe infolge eines Bremsvorgangs auftretenden Phasenverschiebung das angelegte Bremsmoment in der Auswerteeinheit ermittelbar ist.

Als Drehzahlsensor wird dabei bevorzugt ein induktiver Sensor eingesetzt. Bevorzugt sind beide Drehzahlsensoren solche induktiven Sensoren.

Die beiden Signale der beiden Drehzahlsensoren werden im Fall einer Bremsbetätigung signaltechnisch ausgewertet, wobei die Phasenverschiebung berechnet und damit auf die Verformung der Bremsscheibe zurückgerechnet wird.

Gemäß einer weiteren Ausführungsvariante einer erfindungsgemäßen Scheibenbremse ist nahe der Bremsscheibe wenigstens eine ein elektrisches Feld in der Bremsscheibe erzeugende Spule befestigt. Das elektrische Feld ändert sich infolge einer durch einen Bremsvorgang hervorgerufenen mechanischen Verformung der Bremsscheibe. Aus der Änderung des elektrischen Feldes kann das Bremsmoment in der Auswerteeinheit ermittelt werden.

Gemäß einer nochmals alternativen Ausführungsvariante ist die Messvorrichtung als mit der Auswerteeinheit gekoppelter Körperschallsensor ausgebildet, wobei aus einer durch mechanische Verformung der Bremsscheibe hervorgerufenen Änderung des Körperschalls der Bremsscheibe infolge eines Bremsvorgangs herbeigeführten in der Auswerteeinheit das Bremsmoment ermittelbar ist.

Bei dem erfindungsgemäßen Verfahren zum Erfassen eines Bremsmoments einer Scheibenbremse werden in einem ersten Verfahrensschritt eine Verformung oder Temperaturerhöhung der Bremsscheibe bei Bremsbetätigung mithilfe einer an der Scheibenbremse angeordneten Messvorrichtung gemessen. In einem zweiten Schritt werden die Messwerte als Bremsmoment der Scheibenbremse in der Auswerteeinheit ausgewertet.

Nachfolgend werden bevorzugte Ausführungsbeispiele der Erfindung anhand der beiliegenden Zeichnungen näher erläutert. Es zeigen:
- Fig. 1: eine schematische Draufsicht auf eine Bremsscheibe einer Scheibenbremse mit schematisch angedeutetem Bremsbelag sowie Messpunkten einer Temperaturmessvorrichtung,
- Fig. 2: eine schematische Seitenansicht einer Ausführungsvariante einer Bremsscheibe mit an einem Scheibenhals angeordneter optischer Messeinheit,
- Fig. 3 und 4: Seitenansichten von Ausführungsvarianten einer erfindungsgemäßen Scheibenbremse mit auf der Mantelfläche eines Reibrings angeordnetem erstem Element einer berührungslos arbeitenden Drehzahlsensoreinheit,
- Fig. 5: eine schematische Draufsicht einer alternativen Ausführungsvariante einer Bremsscheibe einer Scheibenbremse mit Innenverzahnung und an Innenzähnen angeordneten Kraftmesssensoren,
- Fig. 6: eine Draufsicht auf eine alternative Ausführungsvariante einer Bremsscheibe einer Scheibenbremse mit nahe dem Innenrand eines Reibrings angeordnetem Element zur Messung einer Verformung,
- Fig. 7: eine Seitenansicht einer weiteren Ausführungsvariante einer Bremsscheibe einer Scheibenbremse mit Innenverzahnung und Adapter zum Anbringen an einer Fahrzeugachse mit auf einem Adapterhals angeordneter optischen Messeinheit,
- Fig. 8: eine Seitenansicht einer weiteren Ausführungsvariante einer Bremsscheibe einer Scheibenbremse mit auf dem Adapterhals angeordnetem Dehnungsmessstreifen und
- Fig. 9: ein schematisches Flussdiagramm eines erfindungsgemäßen Verfahrens.

In der der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, Bremsscheibe, des Scheibenhalses, des Reibrings und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

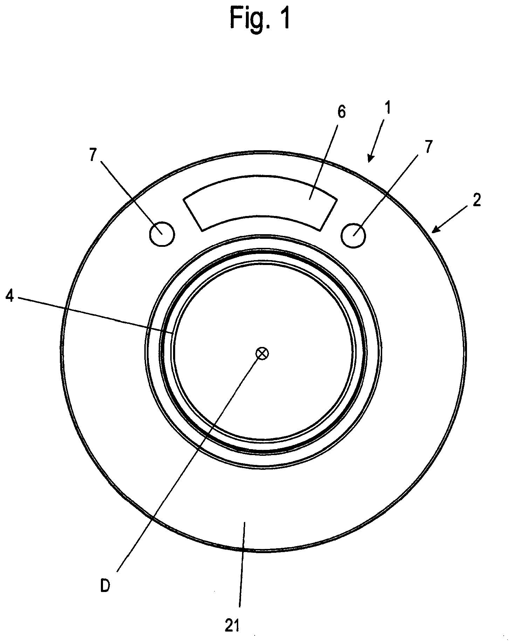

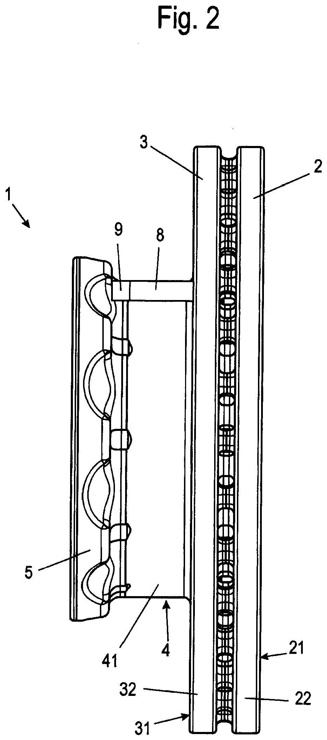

In der **Fig. 1** ist mit dem Bezugszeichen 1 insgesamt eine Ausführungsvariante einer Bremsscheibe einer Scheibenbremse bezeichnet. Die Bremsscheibe 1 weist wenigstens einen Reibring 2 auf, bevorzugt zwei Reibringe 2, 3, wie es beispielsweise in Fig. 2 gezeigt ist. Vom Innenrand des Reibrings 2 erstreckt sich senkrecht zu einer Reibfläche 21 des Reibrings 2 ein zylindrischer Scheibenhals 4, an dessen vom Reibring 2 abgewandten Ende, wie es in **Fig. 2** gezeigt ist, ein Flansch 5 angeformt ist, mit dem die Bremsscheibe 1 an der Achse eines Kraftfahrzeugs, insbesondere eines Nutzfahrzeugs befestigbar ist.

Beim Zuspannen der Scheibenbremse mit einer hier nicht dargestellten Zuspanneinrichtung werden Bremsbeläge 6 gegen die Reibfläche 21, 31 der Reibring 2, 3 gedrückt, wobei in der in der Fig. 1 gezeigten schematischen Darstellung ein solcher Bremsbelag 6 rein schematisch dargestellt ist.

Zur Ermittlung eines auf die Bremsscheibe 1 wirkenden Bremsmoments wird im in Fig. 1 dargestellten Ausführungsbeispiel eine Temperaturerhöhung mittels berührungsloser Temperatursensoren, bevorzugt mittels eines Pyrometers gemessen.

Da die eingebrachte Bremsenergie proportional zur Temperaturerhöhung der Bremsscheibe 1 ist, lässt sich in einer Auswerteeinheit, die mit dem oder den Pyrometer(n) gekoppelt ist bzw. sind das beim Bremsvorgang ausgeübte Bremsmoment berechnen.

Die mit dem Bezugszeichen 7 versehenen Kreise auf der Reibfläche 21 des Bremsscheibe 1 stellen hier schematisch Messfleckmarkierungen dar, auf die ein jeweiliges Pyrometer ausgerichtet ist.

Die Temperatursensoren können dabei beispielsweise an einem Bremsträger (nicht dargestellt) der Scheibenbremse festgelegt sein.

Wie in Fig. 1 des Weiteren zu erkennen ist, sind die Temperatursensoren dabei bevorzugt so angeordnet, dass sie vor und nach der Belagauftrefffläche des jeweiligen Bremsbelags 6 die Reibfläche 21 des jeweiligen Reibrings 2 abtasten. Die gemessene Temperaturdifferenz vor und nach dem Bremsvorgang kann bei mehreren vorhandenen Temperaturmessvorrichtungen gemittelt werden, was eine optimierte Berechnung des Bremsmoments aus der Temperaturdifferenz ermöglicht.

Bei der in Fig. 2 gezeigten schematischen Darstellung einer Bremsscheibe 1 mit zwei Reibringen 2, 3, einem Scheibenhals 4 und Flansch 5 ist ein bevorzugt gekapseltes Rohr 8 in den Scheibenhals 4 integriert.

Das Rohr 8 erstreckt sich dabei senkrecht zur Reibfläche 21, 31 der Reibringe 2, 3.

Im Falle einer Abbremsung der sich mit einem Fahrzeugrad drehenden Bremsscheibe 1 führt das dabei auftretende Bremsmoment zu einer Torsionsverformung, bei der der Scheibenhals 4 in Drehrichtung der Bremsscheibe 1 geringfügig verdreht wird, die zu einer Krümmung des Rohrs 8 führt.

Die Krümmung des Rohrs 8 wird im hier gezeigten Beispiel mithilfe einer optischen Messeinheit 9, beispielsweise in Gestalt einer Fotozelle erfasst.

Mit der Krümmung des Rohrs 8 einher geht dabei eine Helligkeitsänderung im Inneren des Rohrs 8, die von der optischen Messeinheit 9 erfasst wird. Das Maß der Helligkeitsänderung dient dabei als Maß für die Verformung der Bremsscheibe 1, aus der auf das ausgeübte Bremsmoment zurückgerechnet werden kann. Das so berechnete Bremsmoment geht dabei in die weitere Steuerung des Zuspannvorgangs der Scheibenbremse ein.

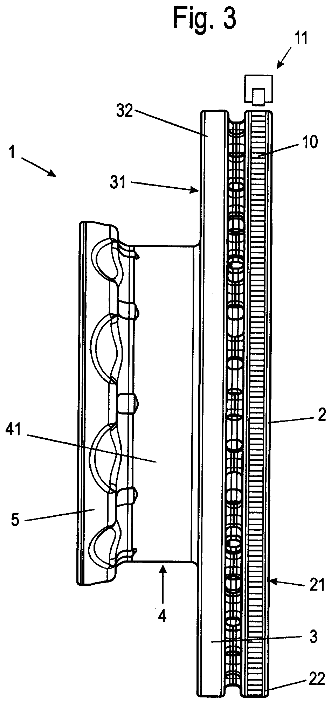

Bei der in **Fig. 3** gezeigten Ausführungsvariante ist auf einer Mantelfläche 22 des Reibrings 2 ein erstes Element 10 einer Drehzahlsensoreinheit angeordnet.

Die Drehzahl des Reibrings 2 wird dabei mithilfe eines Drehzahlsensors 11 erfasst, der nahe der Mantelfläche 22 des Reibrings 2 angebracht ist. Der Drehzahlsensor 11 ist dabei bevorzugt als induktiver Sensor ausgebildet.

Um bei diesem Ausführungsbeispiel eine Verformung der Bremsscheibe 1 zu erfassen, wird der Drehzahlsensor 11 über die Auswerteeinheit mit einem weiteren standardmäßig am Fahrzeugrad vorgesehenen Drehzahlsensor (nicht gezeigt) gekoppelt.

In einem Nichtbremszustand sind die beiden Signale der Drehzahlsensoren phasengleich zueinander, wohingegen im Fall einer Bremsbetätigung, bei der der Reibring 2, auf dem das erste Element 10 angeordnet ist, früher verlangsamt wird als das Fahrzeugrad selber, woraus sich eine Verformung in Gestalt einer Torsion der Bremsscheibe 1 ausbildet, was zu einer Phasenverschiebung der Signale der Drehzahlsensoren führt. Das Maß dieser Phasenverschiebung dient dabei der Berechnung des ausgeübten Bremsmoments.

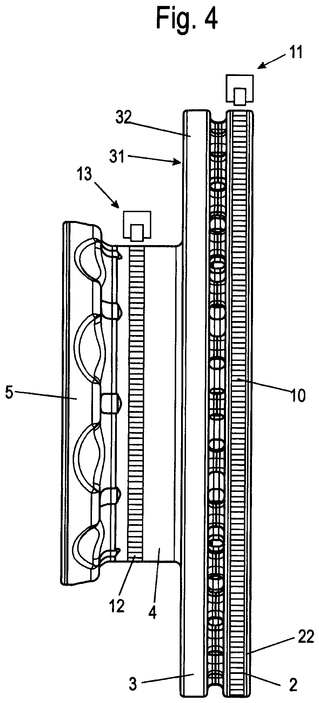

Bei der in **Fig. 4** gezeigten Ausführungsvariante ist als Referenzsensor anstelle des am Fahrzeugrad angeordneten Drehzahlsensors auf dem Scheibenhals 4 der Bremsscheibe 1 ein weiteres Element 12 einer Drehzahlsensoreinheit aufgebracht und entsprechend ein weiterer Drehzahlsensor 13, der über die Auswerteeinheit mit dem Sensor 11 gekoppelt ist.

Das Element 12 ist hierbei bevorzugt in maximaler Entfernung von der Drehzahlsensoreinheit am Reibring 2 entfernt angeordnet. Die Teilung der jeweiligen ersten Elemente 10, 12 sind dabei hinreichend groß bemessen, um die erwartete Verformung der Bremsscheibe 1 hinreichend genau erfassen zu können.

Der hier als Referenzsensor dienende Sensor 13 ist bei der in Fig. 4 gezeigten Ausführungsvariante in möglichst weiter Entfernung zur Reibfläche 21, 31 der Reibringe 2, 3 entfernt angeordnet, um einen Temperatureinfluss zu minimieren.

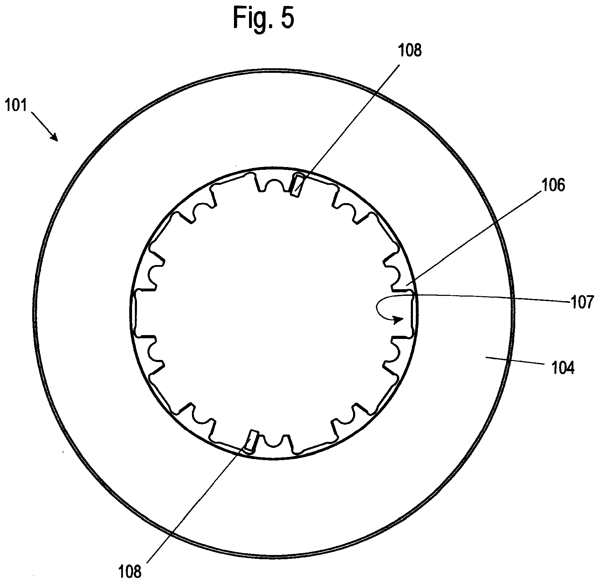

In den **Fig. 5 bis 8** sind jeweilige Ausführungsvarianten von Bremsscheiben 100 dargestellt, die nicht einstückig mit dem Scheibenhals ausgeführt sind, sondern eine Bremsscheibe 101 und einen Adapter 110 zur Befestigung an einer Fahrzeugachse aufweisen, wobei die Bremsscheiben 101 mit einer Innenverzahnung mit einer Vielzahl von Innenzähnen 106 versehen sind, in die Zähne eines Adapterhalses 111 des Adapters 110 eingreifen.

Zur Berechnung des Bremsmoments werden bei der in der Fig. 5 gezeigten Ausführungsvariante an einem oder mehreren der Innenzähne 106 Kraftsensoren 108 an den Flanken der Innenzähne 106 angeordnet.

Als Kraftsensoren werden dabei bevorzugt Piezoelemente eingesetzt. Denkbar sind auch Kraftsensoren auf Basis von Dehnungsmessstreifen.

Bei einer Bremsbetätigung kommt es hier zur Kraftübertragung zwischen den Innenzähnen der Scheibe 101 und den Zähnen des Adapterhalses 111. Aus der so gemessenen Kraft lässt sich dann in der Auswerteeinheit das wirkende Bremsmoment berechnen.

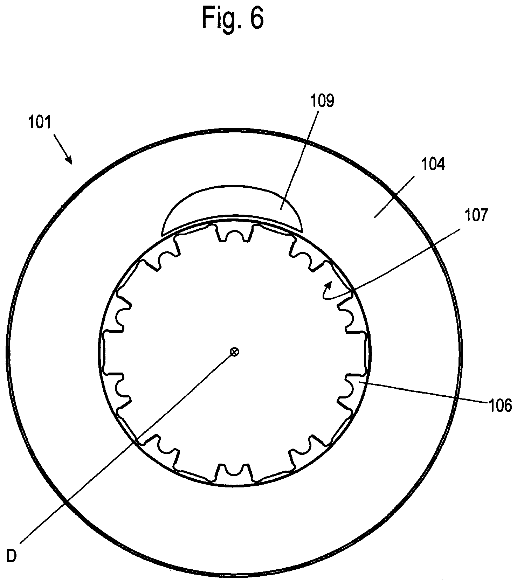

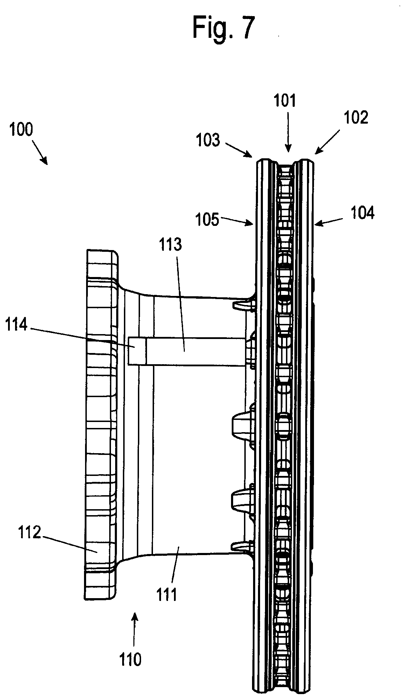

Bei der in den Fig. 6 und 7 gezeigten Ausführungsvariante dient zur Ermittlung des Bremsmoments wiederum eine optische Messeinheit 114, beispielsweise in Gestalt einer Fotozelle, die in diesem Fall eine Verformung eines sich in Abhängigkeit vom anliegenden Bremsmoment verformenden Elements 109 der Bremsscheibe 100 erfassbar ist, das an dem wenigstens einen Reibring 103 der Bremsscheibe 101 außerhalb einer Reibfläche 105 des Reibrings 103 angeordnet, insbesondere angeformt ist. Das Element 109 ist dabei vorzugsweise in Gestalt einer Kontur nahe dem Innenrand des Reibrings 103 ausgebildet, das sich in Abhängigkeit des anliegenden Bremsmoments verformt.

Zur Erfassung dieser Verformung dient hier, wie in Fig. 7 gezeigt ist, ein am Adapterhals 111 angeordnetes Rohr 113, an dessen dem Adapterflansch 112 nahen Ende eine optische Messeinheit 114, beispielsweise in Gestalt einer Fotozelle, angeordnet ist.

Auch hier wird die Verformung des Elements 109 bevorzugt durch Änderung der von der Fotozelle erfassten Helligkeit erfasst und in der nachgeschalteten Auswerteeinheit ausgewertet zur Berechnung des anliegenden Bremsmoments.

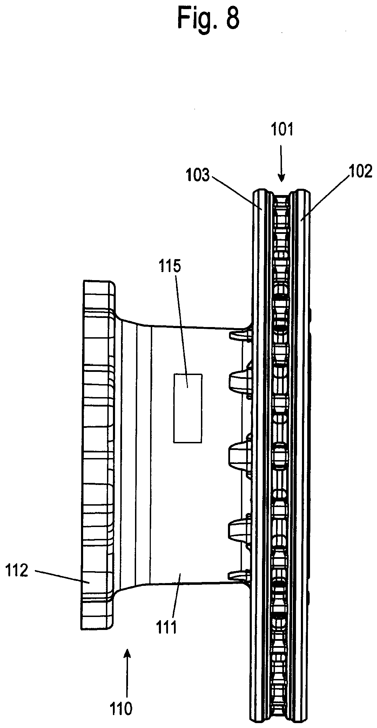

Bei der in Fig. 8 gezeigten Ausführungsvariante einer Bremsscheibe 101 einer Scheibenbremse ist am Adapterhals 111 des Adapters 110 ein Dehnungsmessstreifen 115 angebracht, der die Verformung der Bremsscheibe erfasst.

Bevorzugt wird hier zur Anordnung des Dehnungsmessstreifens 115 zwischen der Bremsscheibe 101 und dem (nicht gezeigten) Bremssattel Bauraum vorgehalten. Dies hat den weiteren Vorteil, dass der Dehnungsmessstreifen 115 zudem vor Umgebungseinflüssen wie beispielsweise Steinschlag geschützt ist.

Die Signalübertragung zwischen dem Dehnungsmessstreifen 115 und der Auswerteeinheit erfolgt hier bevorzugt kabellos, da sich der Dehnungsmessstreifen 115 mit der Drehgeschwindigkeit der Bremsscheibe 100 dreht.

Gemäß einer weiteren nicht in den Figuren dargestellten Ausführungsvariante einer erfindungsgemäßen Scheibenbremse ist nahe der Bremsscheibe 1, 100 wenigstens eine ein elektrisches Feld in der Bremsscheibe 1, 100 erzeugende Spule befestigt, wobei das elektrische Feld sich infolge einer durch einen Bremsvorgang hervorgerufenen mechanischen Verformung der Bremsscheibe 1, 100 ändert und aus dieser Änderung des elektrischen Feldes das Bremsmoment ermittelbar ist.

Nach einer weiteren hier nicht dargestellten Ausführungsvariante ist die Messvorrichtung als mit der Auswerteeinheit gekoppelter Körperschallsensor ausgebildet ist, wobei aus einer durch einen Bremsvorgang herbeigeführten mechanischen Verformung der Bremsscheibe 1, 100 hervorgerufenen Änderung des Körperschalls der Bremsscheibe 1, 100 in der Auswerteeinheit das Bremsmoment ermittelbar ist.

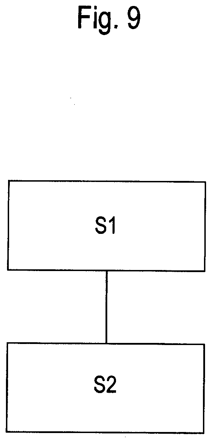

**Fig. 9** zeigt schematisch ein Ablaufdiagramm eines erfindungsgemäßen Verfahrens zum Erfassen eines Bremsmoments einer Scheibenbremse, wobei in einem Schritt S1 eine Verformung oder Temperaturerhöhung der Bremsscheibe 1, 100 der Scheibenbremse bei Bremsbetätigung mithilfe einer an der Scheibenbremse angeordneten Messvorrichtung gemessen wird.

Die Messung kann dabei in unterschiedlicher Weise, wie oben beschrieben erfolgen.

In einem zweiten Verfahrensschritt S2 erfolgt eine Auswertung dieser Messwerte zur Berechnung eines Bremsmoments der Scheibenbremse 1 in der Auswerteeinheit.

### Bezugszeichenliste

- 1: Bremsscheibe

- 2: Reibring
- 21: Reibfläche
- 22: Mantelfläche

- 3: Reibring
- 31: Reibfläche
- 32: Mantelfläche

- 4: Scheibenhals
- 5: Flansch
- 6: Bremsbelag
- 7: Temperaturmesspunkt
- 8: Rohr
- 9: optische Messeinheit
- 10: erstes Element
- 11: Drehzahlsensor
- 12: erstes Element
- 13: Drehzahlsensor

- 100: Bremsscheibe
- 101: Scheibe
- 102: Reibring
- 103: Reibring
- 104: Reibfläche
- 105: Reibfläche
- 106: Innenzahn
- 107: Zahnaufnahme
- 108: Kraftsensor
- 109: Element
- 110: Adapter
- 111: Adapterhals
- 112: Adapterflansch
- 113: Rohr
- 114: optische Messeinheit
- 115: Dehnungsmessstreifen

- S1: Schritt 1
- S2: Schritt 2

- D: Drehachse

## Patentansprüche

1. Scheibenbremse für ein Kraftfahrzeug, insbesondere für ein Nutzfahrzeug, aufweisend
eine Bremsscheibe (1, 100) mit wenigstens einem Reibring (2, 3, 102, 103), wenigstens einen Bremsbelag (6),
eine Zuspanneinrichtung, mit der der wenigstens eine Bremsbelag (6) an die Bremsscheibe (1, 100) unter Ausübung eines Bremsmoments auf die Bremsscheibe (1, 100) andrückbar ist,
eine Messvorrichtung und eine mit dieser gekoppelte Auswerteeinheit zur Bestimmung des auf die Bremsscheibe (1, 100) ausgeübten Bremsmoments,
**dadurch gekennzeichnet, dass**
mit der Messvorrichtung infolge eines Bremsvorgangs auftretende physikalische Veränderungen der Bremsscheibe (1, 100) erfassbar sind,
wobei in der Auswerteeinheit aus der gemessenen physikalischen Veränderung der Bremsscheibe (1, 100) das beim Bremsvorgang ausgeübte Bremsmoment berechenbar ist.

2. Scheibenbremse nach Anspruch 1,
**dadurch gekennzeichnet, dass**
die Messvorrichtung als Temperaturmessvorrichtung mit wenigstens einem die Temperatur der Reibfläche (21, 31, 104, 105) des wenigstens einen Reibrings (2, 3, 102, 103) der Bremsscheibe (1, 100) berührungslos erfassenden Temperatursensor ausgebildet ist.

3. Scheibenbremse nach Anspruch 2,
**dadurch gekennzeichnet, dass**
die Messvorrichtung wenigstens zwei Temperatursensoren aufweist, die auf einen einzigen ringförmigen Ausschnitt der Reibfläche (21, 31, 104, 105) der Bremsscheibe (1, 100) ausgerichtet sind.

4. Scheibenbremse nach Anspruch 1,
**dadurch gekennzeichnet, dass**
mit der Messvorrichtung eine Verformung eines Abschnitts der Bremsscheibe (1, 100) erfassbar ist.

5. Scheibenbremse nach Anspruch 4,
**dadurch gekennzeichnet, dass**
die Messvorrichtung als mit der Auswerteeinheit gekoppelter Dehnungsmessstreifen (115) ausgebildet ist

6. Scheibenbremse nach Anspruch 5, wobei die Bremsscheibe (100) einen mit einem Reibring (103) verbundenen Adapterhals (111) aufweist,
**dadurch gekennzeichnet, dass**
der Dehnungsmessstreifen (115) am Adapterhals (111) angeordnet ist.

7. Scheibenbremse nach Anspruch 4,
**dadurch gekennzeichnet, dass**
die Messvorrichtung als optische Messeinheit (9, 114), insbesondere als Fotozelle, ausgebildet ist.

8. Scheibenbremse nach Anspruch 7, wobei die Bremsscheibe (100) einen mit einem Reibring (103) verbundenen Adapterhals (111) aufweist,
**dadurch gekennzeichnet, dass**
mit der optischen Messeinheit (114) eine Verformung eines sich in Abhängigkeit vom anliegenden Bremsmoment verformenden Elements (109) der Bremsscheibe (100) erfassbar ist, das an dem wenigstens einen Reibring (103) der Bremsscheibe (100) außerhalb einer Reibfläche (105) des Reibrings (103) angeordnet ist.

9. Scheibenbremse nach Anspruch 7, wobei die Bremsscheibe (1) einen mit dem wenigstens einen Reibring (3) verbundenen Scheibenhals (4) aufweist,
**dadurch gekennzeichnet, dass**
mit der optischen Messeinheit (9) eine Verformung eines axial zur Drehachse der Bremsscheibe (1) ausgerichteten, im Scheibenhals (4) der Bremsscheibe (1) eingelassenen Rohres (8) oder eine Relativverschiebung wenigstens zweier auf dem Scheibenhals (4) in Richtung der Drehachse der Bremsscheibe (1) hintereinander angeordneter Ringstücke erfassbar ist.

10. Scheibenbremse nach Anspruch 1, wobei die Bremsscheibe (1) einen mit dem wenigstens einen Reibring (3) verbundenen Scheibenhals (4) aufweist, an dessen Mantelfläche (41) ein erstes Element (12) einer ersten berührungslos arbeitenden Drehzahlsensoreinheit angeordnet ist,
**dadurch gekennzeichnet, dass**
an einer Mantelfläche (22, 32) des wenigstens einen Reibrings (2, 3) ein erstes Element (10) einer zweiten Drehzahlsensoreinheit angeordnet ist,
wobei die aktuelle Drehzahl der Bremsscheibe (1) messende Drehzahlsensoren mit der Auswerteeinheit gekoppelt sind, wobei aus einer durch eine Verformung der Bremsscheibe (1) infolge eines Bremsvorgangs auftretenden Phasenverschiebung das angelegte Bremsmoment in der Auswerteeinheit ermittelbar ist.

11. Scheibenbremse nach Anspruch 1,
**dadurch gekennzeichnet, dass**
nahe der Bremsscheibe (1, 100) eine ein elektrisches Feld in der Bremsscheibe (1, 100) erzeugende Spule befestigt ist, wobei das elektrische Feld sich infolge einer durch einen Bremsvorgang hervorgerufenen mechanischen Verformung der Bremsscheibe (1, 100) ändert,
wobei aus der Änderung des elektrischen Feldes das Bremsmoment ermittelbar ist.

12. Scheibenbremse nach Anspruch 1, wobei,
**dadurch gekennzeichnet, dass**
die Messvorrichtung als mit der Auswerteeinheit gekoppelter Körperschallsensor ausgebildet ist, wobei aus einer durch einen Bremsvorgang herbeigeführten mechanischen Verformung der Bremsscheibe (1, 100) hervorgerufenen Änderung des Körperschalls der Bremsscheibe (1, 100) in der Auswerteeinheit das Bremsmoment ermittelbar ist.

13. Verfahren zum Erfassen eines Bremsmoments einer Scheibenbremse nach Anspruch 1, **gekennzeichnet durch** folgende Verfahrensschritte:
(S1) Messen einer Verformung oder Temperaturerhöhung der Bremsscheibe (1, 100) der Scheibenbremse bei Bremsbetätigung mithilfe einer an der Scheibenbremse angeordneten Messvorrichtung; und
(S2) Auswerten der Messwerte als Bremsmoment der Scheibenbremse (1) in der Auswerteeinheit.

## Claims

1. Disc brake for a motor vehicle, in particular a commercial vehicle, having
a brake disc (1, 100) with at least one friction ring (2, 3, 102, 103), at least one brake pad (6),
an application device with which the at least one brake pad (6) can be pressed onto the brake disc (1, 100) while applying a braking torque,
a measuring device and an evaluation unit coupled thereto for determining the braking torque applied to the brake disc (1, 100)
**characterised in that**
physical changes of the brake disc (1, 100) resulting from a braking process can be detected with the measuring device,
wherein the braking torque applied in the braking process can be calculated in the evaluation unit from the measured physical change of the brake disc (1, 100).

2. Brake disc according to claim 1,
**characterised in that**
the measuring device is designed as a temperature measuring device with at least one temperature sensor contactlessly detecting the temperature of the friction surface (21, 31, 104, 105) of the least one friction ring (2, 3, 102, 103) of the brake disc (1, 100).

3. Brake disc according to claim 2,
**characterised in that**
the measuring device has at least two temperature sensors arranged on a single annular section of the friction surface (21, 31, 104, 105) of the brake disc (1, 100).

4. Brake disc according to claim 1,
**characterised in that**
a deformation of a section of the brake disc (1, 100) can be detected with the measuring device.

5. Brake disc according to claim 4,
**characterised in that**
the measuring device is designed as a strain gauge (115) coupled to the evaluation unit.

6. Brake disc according to claim 5, wherein the brake disc (100) has an adapter neck (111) connected to a friction ring (103),
**characterised in that**
the strain gauge (115) is located at the adapter neck (111).

7. Brake disc according to claim 4,
**characterised in that**
the measuring device is designed as an optical measuring unit (9, 114) in particular as a photocell.

8. Brake disc according to claim 7, wherein the brake disc (100) has an adapter neck (111) connected to a friction ring (103),
**characterised in that**
with the optical measuring unit (114), a deformation of an element (109) of the brake disc (100), which element (109) is deformed as a function of the applied braking torque and is located at the at least one friction ring (103) of the brake disc (100) outside a friction surface (105) of the friction ring (103), can be detected.

9. Brake disc according to claim 7, wherein the brake disc (1) has a disc neck (4) connected to the at least one friction ring (3),
**characterised in that**
with the optical measuring unit (9), a deformation of a tube (8) oriented axially to the axis of rotation of the brake disc (1) and embedded in the disc neck (4) of the brake disc (1) or a relative displacement of at least two annular pieces arranged on the disc neck (4) behind one another in the direction of the axis of rotation of the brake disc (1) can be detected.

10. Brake disc according to claim 1, wherein the brake disc (1) has a disc neck (4) connected to the at least one friction ring (3), at the outer surface (41) of which disc neck (4) a first element (12) of a first contactlessly operating speed sensor unit is located,
**characterised in that**
a first element (10) of a second speed sensor unit is located at an outer surface (22, 32) of the at least one friction ring (2, 3),
wherein speed sensors measuring the current rotational speed of the brake disc (1) are coupled to the evaluation unit, wherein the applied braking torque can be determined in the evaluation unit from a phase shift caused by a deformation of the brake disc (1) as a result of a braking process.

11. Brake disc according to claim 1,
**characterised in that**
a coil generating an electric field in the brake disc (1, 100) is mounted near the brake disc (1, 100), wherein the electric field changes as a result of a mechanical deformation of the brake disc (1, 100) caused by a braking process,
wherein the braking torque can be determined from the change of the electric field.

12. Brake disc according to claim 1,
**characterised in that**
the measuring device is designed as a structure-borne sound sensor coupled to the evaluation unit, wherein the braking torque can be determined in the evaluation unit from a change of the structure-borne sound of the brake disc (1, 100) as a result a mechanical deformation of the brake disc (1, 100) caused by a braking process,

13. Method for detecting a braking torque of a disc brake according to claim 1, **characterised by** the following procedural steps:
(S1) measuring a deformation or temperature increase of the brake disc (1, 100) of the disc brake during a brake application by means of a measuring device located at the disc brake; and
(S2) evaluating the measured values as braking torque of the disc brake (1) in the evaluation unit.

## Revendications

1. Frein à disque d'un véhicule automobile, notamment d'un véhicule utilitaire, comportant
un disque (1, 100) de frein ayant au moins un anneau (2, 3, 102, 103) de friction, au moins une garniture (6) de frein,
un dispositif de serrage, par lequel la au moins une garniture (6) de frein peut être poussée sur le disque (1, 100) de frein en exerçant un couple de freinage sur le disque (1, 100) de frein,
un système de mesure et une unité d'analyse reliée à celui-ci pour la détermination du couple de freinage exercé sur le disque (1, 100) de frein,
**caractérisé en ce que**
les modifications physiques du disque (1, 100) de frein se produisant en raison de l'opération de freinage peuvent être détectées par le système de mesure,
dans lequel, dans l'unité d'analyse, le couple de freinage exercé lors du freinage peut être calculé dans l'unité d'analyse à partir de la modification physique mesurée du disque (1, 100) de frein.

2. Frein à disque suivant la revendication 1,
**caractérisé en ce que**
le système de mesure est constitué sous la forme d'un système de mesure de la température ayant au moins une sonde de température détectant sans contact la température de la surface (21, 31, 104, 105) de friction du au moins un anneau (2, 3, 102, 103) de friction du disque (1, 100) de frein.

3. Frein à disque suivant la revendication 2,
**caractérisé en ce que**
le système de mesure a au moins deux sondes de température, qui sont orientées sur une partie annulaire unique de la surface (21, 31, 104, 105) de friction du disque (1, 100) de frein.

4. Frein à disque suivant la revendication 1,
**caractérisé en ce que,**
par le système de mesure, une déformation d'une partie du disque (1, 100) de frein peut être détectée.

5. Frein à disque suivant la revendication 4,
**caractérisé en ce que**
le système de mesure est constitué sous la forme de jauge (115) de contrainte reliée à l'unité d'analyse.

6. Frein à disque suivant la revendication 5, dans lequel le disque (100) de frein a un col (111) formant adaptateur relié à un anneau (103) de friction,
**caractérisé en ce que**
la jauge (115) de contrainte est montée sur le col (111) formant adaptateur.

7. Frein à disque suivant la revendication 4,
**caractérisé en ce que**
le système de mesure est constitué sous la forme d'une unité (9, 114) optique de mesure, notamment sous la forme d'une cellule photoélectrique.

8. Frein à disque suivant la revendication 7, dans lequel le disque (100) de frein a un col (111) formant adaptateur relié à un anneau (103) de friction,
**caractérisé en ce que,**
par l'unité (114) optique de mesure, peut être détectée une déformation d'un élément (109), se déformant en fonction du couple de freinage appliqué, du disque (100) de frein, qui est disposé sur le au moins un anneau (103) de friction du disque (100) de frein à l'extérieur d'une surface (105) de friction de l'anneau (103) de friction.

9. Frein à disque suivant la revendication 7, dans lequel le disque (1) de frein a un col (4) de disque relié au au moins un anneau (3) de friction,
**caractérisé en ce que,**
par l'unité (9) optique de mesure, peut être détectée une déformation d'un tube (8) orienté axialement par rapport à l'axe de rotation du disque (1) de frein, et encastré dans le col (4) du disque (1) de frein ou un déplacement relatif d'au moins deux pièces annulaires disposées l'une derrière l'autre dans la direction de l'axe de rotation du disque (1) de frein sur le col (4) du disque.

10. Frein à disque suivant la revendication 1, dans lequel le disque (1) de frein a un col (4) de disque, qui est relié au au moins un anneau (3) de friction et sur la surface (41) latérale duquel est disposé un premier élément (12) d'une unité de capteur de vitesse de rotation fonctionnant sans contact,
**caractérisé en ce qu'**
un premier élément (10) d'une deuxième unité de capteur de vitesse de rotation est disposé sur une surface (22, 32) latérale du au moins un anneau (2, 3) de friction,
dans lequel des capteurs de vitesse de rotation mesurant la vitesse de rotation instantanée du disque (1) de frein sont reliés à l'unité d'analyse, dans lequel par une déformation du disque (1) de frein en raison d'un freinage, le couple de freinage appliqué peut être déterminé dans l'unité d'analyse

11. Frein à disque suivant la revendication 1,
**caractérisé en ce que**
près du disque (1, 100) de frein est fixée une bobine produisant un champ électrique dans le disque (1, 100) de frein, dans lequel le champ électrique se modifie en raison d'une déformation mécanique du disque (1, 100) de frein due à un freinage,
dans lequel le couple de freinage peut être déterminé à partir de la modification du champ électrique.

12. Frein à disque suivant la revendication 1,
**caractérisé en ce que**
le système de mesure est constitué sous la forme d'un capteur du bruit de corps relié à l'unité d'analyse, dans lequel, à partir d'une modification du bruit de corps du disque (1, 100) de frein, provoquée à partir d'une déformation mécanique du disque (1, 100) de frein due à un freinage, le couple de freinage peut être déterminé dans l'unité d'analyse.

13. Procédé de détection d'un couple de freinage d'un frein à disque suivant la revendication 1, **caractérisé par** les stades de procédé suivants :
(S1) mesure d'une déformation ou d'une élévation de la température du disque (1, 100) du frein à disque lors de l'actionnement du frein à l'aide d'un système de mesure disposé dans le frein à disque ; et
(S2) analyse des valeurs de mesure comme couple de freinage du frein (1) à disque dans l'unité d'analyse.
